# EUROPEAN PATENT SPECIFICATION

(11) **EP 4 395 447 B1**
(45) Date of publication and mention of the grant of the patent: **27.11.2024**
(21) Application number: 23150013.3
(22) Date of filing: 02.01.2023
(51) Int. Cl.: H04W 76/12, H04W 48/18, H04W 76/11, H04L 61/4511

(54) **METHOD FOR CONNECTING A USER EQUIPMENT TO A VIRTUAL NETWORK AS PART OF A CLOUD PROVIDER INFRASTRUCTURE, USER EQUIPMENT, TELECOMMUNICATION NETWORK, PROGRAM AND COMPUTER-READABLE MEDIUM**
VERFAHREN ZUM VERBINDEN EINES BENUTZERGERÄTS MIT EINEM VIRTUELLEN NETZWERK ALS TEIL EINER CLOUD-PROVIDER-INFRASTRUKTUR, BENUTZERGERÄT, TELEKOMMUNIKATIONSNETZWERK, PROGRAMM UND COMPUTERLESBARES MEDIUM
PROCÉDÉ DE CONNEXION D'UN ÉQUIPEMENT UTILISATEUR À UN RÉSEAU VIRTUEL DANS LE CADRE D'UNE INFRASTRUCTURE DE FOURNISSEUR DE SERVICES EN NUAGE, ÉQUIPEMENT UTILISATEUR, RÉSEAU DE TÉLÉCOMMUNICATION, PROGRAMME ET SUPPORT LISIBLE PAR ORDINATEUR

(43) Date of publication of application: 03.07.2024
(73) Proprietor: Deutsche Telekom AG, 53113 Bonn (DE)
(72) Inventor: COLOM IKUNO, Josep, 2100 Korneuburg (AT)
(74) Representative: Schwöbel, Thilo K.

(56) References cited:
- WO-A1-2021/231145

## Description

### BACKGROUND

The present invention relates a method for using a user equipment with a telecommunications network, wherein the user equipment requests, while being connected to the telecommunications network, to be connected to or to access a further network, wherein the telecommunications network comprises a control plane function and a user plane function, wherein the further network is a virtual network as part of a cloud provider infrastructure, and the further network being accessible, from within the cloud provider infrastructure, using a target network identifier information.

Furthermore, the present invention relates to a user equipment for being operated with a telecommunications network, wherein the user equipment is configured to request, while being connected to the telecommunications network, to be connected to or to access a further network, the further network being a virtual network as part of a cloud provider infrastructure and the further network being accessible, from within the cloud provider infrastructure, using a target network identifier information.

Additionally, the present invention relates to a telecommunications network for using a user equipment with the telecommunications network, wherein the user equipment requests, while being connected to the telecommunications network, to be connected to or to access a further network, wherein the telecommunications network comprises a control plane function and a user plane function, wherein the further network is a virtual network as part of a cloud provider infrastructure, and the further network being accessible, from within the cloud provider infrastructure, using a target network identifier information.

Furthermore, the present invention relates to a program and to a computer-readable medium for using a user equipment with the telecommunications network according to the inventive method.

In conventionally known telecommunications networks, in case that a user equipment - especially an application thereof or running on the user equipment - needs to have connectivity to a specific networking resource or resource provider, such connectivity typically requires the establishment or the provisioning of a data network, associated with a data network name (DNN), by the telecommunications network or within the respective core network of or assigned to the telecommunications network. As a consequence thereof, in conventionally known telecommunications networks, as a prerequisite of the user equipment (or an application thereof) having or getting connectivity to such a specific networking resource or resource provider, the respective (or considered) user equipment (or the application thereof) needs to request connectivity to a data network (or to a data network name, DNN) or to a combination of a data network (name) (DNN) and a network slice (S-NSSAI, single - network slice selection assistance information).

However, such a need (for the user equipment or the application thereof) to necessarily request connectivity to a data network name and/or a network slice typically renders the establishment of the connection or the connectivity to the specific networking resource or resource provider more cumbersome and/or more complicated than necessary.

WO 2021/231145 A1 shows methods, apparatuses and systems directed to support provisioning domains, PvDs, in 5G networks. In particular, a network entity running a policy control function, PCF, may send to a wireless receive and transmit unit, WTRU, at least one WTRU route selection policy, URSP, rule associated with, for example, PvD descriptors. For example, URSP rules may be configured e.g., as part of the subscription profile and PvD descriptors may be configured e.g., as part of a network-wide configuration. An application function, AF, may use a network exposure function, NEF, application programming interface, API, to access and, for example, update, e.g. through any of NEF and PCF, any of URSP rules and PvD descriptors. Furthermore, a WTRU may participate in a data network access identifier, DNAI, selection by including a PvD ID in, for example, PDU session establishment messages.

### SUMMARY

An object of the present invention is to provide a technically simple, effective and cost effective solution for using a user equipment with a telecommunications network, wherein the user equipment requests, while being connected to the telecommunications network, to be connected to or to access a further network, the further network being accessible from within the cloud provider infrastructure and using a target network identifier information. A further object of the present invention is to provide a corresponding user equipment, a telecommunications network, and a corresponding program and computer-readable medium.

According to a first aspect, the present invention provides a method for using a user equipment with a telecommunications network, wherein the user equipment requests, while being connected to the telecommunications network, to be connected to or to access a further network, wherein the telecommunications network comprises a control plane function and a user plane function, wherein the further network is a virtual network as part of a cloud provider infrastructure,
wherein the further network is accessible, from within the cloud provider infrastructure, using a target network identifier information,
wherein, in order for the user equipment to use or to get access to the further network, a data network and associated data network name is required to be provisioned or established at the telecommunications network or between the telecommunications network and the cloud provider infrastructure,
wherein, in order for the user equipment to be connected to or to access the further network, the method comprises the following steps:
   -- in a first step, the user equipment requests a communication session to be established to or towards the further network, using the target network identifier information as part of a request message being transmitted, by the user equipment, to the control plane function of the telecommunications network,
   -- in a second step, the communication session is associated to the data network and/or data network name in order to provide connectivity towards the further network via the cloud provider infrastructure using the data network or the data network name,
   -- in a third step, the user equipment receives a communication session establishment accept message, transmitted by the control plane function of the telecommunications network,
   -- in a fourth step, the user equipment uses the established communication session to access the further network via the user plane function of the telecommunications network.

According to the present invention, it is advantageously possible that, in a telecommunications network (typically, but not necessarily, a mobile communication network), a user equipment is enabled to request connectivity to a specific networking resource or resource provider (i.e. to a further network that is accessible from within a cloud provider infrastructure) using a target network identifier information as opposed to the paradigm, in conventionally known telecommunications networks, of necessarily requesting connectivity to a combination of data network name (DNN) and/or a network slice.

In currently known telecommunications networks, in order for a user equipment to realize connectivity to a network within a cloud provider, this can only be done by means of a VPN - virtual private network. While the network operator (of the telecommunications network to which the user equipment is connected) can provide connectivity to a data network (DN), anything beyond that needs to happen over the top (OTT), i.e. typically the user equipment needs previous knowledge of certain parameters in order to achieve connectivity to the intended network. Such requirements of previous knowledge by (or at) the user equipment conflicts with an impulse to rather simplify the user equipments, as well as to allow user equipments to natively access third-party networks and allow the operator to abstract underlying network complexity.

In currently known telecommunications networks - typically being based on a separation between the user equipment, the (radio) access network and the core network -, in order to provide a user equipment with connectivity towards a data network (DN) - e.g., the internet -, the user equipment communicates with the access network (especially the radio access network in a mobile communication network, via a radio interface) and with the core network, and the data network provides connectivity towards applications (e.g. a backend for an application running on the user equipment) by means of a packet data unit session (PDU session) being established between the user equipment and the data network. In this sense, a conventionally known telecommunications network, e.g. a 5G system, provides a "pipe" (i.e. the packet data unit session) realizing connectivity to a given data network. Said connectivity is then typically exposed to application(s) in the user equipment by the operating system via a network interface, with the user equipment being addressable within the data network via, e.g., an IP address, e.g. IP address 10.10.10.42 assigned to the user equipment on PDU Session 1 and another IP address 192.168.0.23 assigned to the user equipment via (or on) PDU Session 2.

Within the context of cloudification and the use of public/hybrid clouds, it is common to use virtual networks, i.e. further networks, being separated from the telecommunications network to which the user equipment is connected to. While different names may be used by different cloud providers (e.g. Virtual Network, "Vnet"; Virtual Private Cloud, "VPC"), a virtual network within a cloud is a virtual version of a physical network, implemented inside of a cloud provider's production network (i.e. inside a cloud provider infrastructure); typically, a virtual network can subsequently be further segmented in several subnetworks. A virtual network provides network connectivity and address allocation to elements (e.g. cloud resources such as virtual machines) within the virtual network.
Such virtual networks are typically constructs within a (public) cloud, i.e. a cloud provider infrastructure, and typically use private ranges or IP addresses (e.g. within a Class A address range, for example 10.0.0.0/8); being private networks, devices outside of a considered cloud (or cloud provider infrastructure) can only be part of such virtual network if connectivity is provided within the network or cloud provider infrastructure, typically by means of a VPN gateway accessible via the public Internet. Virtual networks - as typically all cloud resources - are typically identified by a unique identifier, virtual network identifier, most commonly a universally unique identifier (UUID) such as, e.g., "00112233-4455-6677-c899-aabbccddeeff".
Hence, a virtual network is a private network placed within a cloud provider or cloud provider infrastructure, where cloud resources (e.g. virtual machines, Kubernetes (k8s) clusters, software as a service (SaaS) offerings, etc.) can be instantiated/addressed. However, such resources within a virtual network - as well as the virtual network itself - cannot be accessed from the "outside" (i.e. Internet) unless a given resource is allocated a public IP address (in this case the given resource can be addressed via the Internet) or via VPN tunnel, by means of which the virtual network can be connected to other networks at the other side of the VPN tunnel by means of routing mechanisms.

According to the present invention, it is advantageously possible for a user equipment to easily realize connectivity to a cloud-based network (further network) which connectivity establishment requires previous knowledge of certain parameters so that the user equipment can achieve this connectivity to the intended network: The proposed method advantageously reduces the complexity of realizing such a connectivity for the considered user equipment: The user equipment only needs to know the further network (i.e. the respective target network identifier information thereof) it wants to connect to, indicate it to the network, and the rest is taken care of by the telecommunications network.
Especially according to the present invention, the user equipment (or the application triggering the user equipment) triggers a communication session establishment (especially a packet data unit session establishment) targeting the further network that is not directly accessible (via the telecommunications network the user equipment is attached to). The user equipment is only required to know what the target network identifier information, i.e. the virtual network, (where connectivity is required to) is - not how to achieve it. According to the present invention, this is achieved by the user equipment including a virtual network identifier, i.e. the target network identifier information, in the communication session establishment request, typically a PDU session establishment request. Based on the subscriber data (e.g. whether the user equipment is allowed to get said connectivity, what quality-of-service level is to apply or is the user equipment allowed to, via what network slice should the connectivity be realized), the telecommunications network (to which the user equipment is connected to) either associates the communication session (or PDU session) to an existing data network name (DNN) and/or network slice (S-NSSAI) via which this information can be routed towards the further network within the cloud provider infrastructure, or the telecommunications network provisions connectivity to the respective further network. The user equipment then gets a communication session accept message (typically a PDU Session establishment accept message) and can transmit and/or receive data as normally done via communication sessions (or PDU Sessions) with the exception that in this case the connectivity (request of the user equipment initially) is typically not (or not necessarily) towards a DNN or combination of DNN/S-NSSAI but rather towards the further network being a virtual network.

According to the present invention, it is assumed that the user equipment is used with the telecommunications network, i.e. it is connected to the user equipment, and, while being connected to the telecommunications network, the user equipment requests to be connected to or to access the further network being a virtual network as part of a cloud provider infrastructure. The telecommunications network comprises a control plane function and a user plane function, and the further network is accessible from within (especially only from within, i.e. not from outside of) the cloud provider infrastructure, using a target network identifier information of the further network. It is furthermore assumed that, in order for the user equipment to use or to get access to the further network, a data network and associated data network name is required to be provisioned or established at the telecommunications network or between the telecommunications network and the cloud provider infrastructure. That is, the cloud provider infrastructure is reached from the telecommunications network via a data network. In the context of the present invention, the terms data network and data network name are used rather synonymously, especially the data network relating to an identifier information to indicate, or reference, - especially for the purposes of the telecommunications network or of its core network - the associated data network. In order for the user equipment to be actually connected to or to access the further network, the user equipment requests (in a first step of the inventive method) a communication session to be established to or towards the further network, using the target network identifier information as part of a request message being transmitted, by the user equipment, to the control plane function of the telecommunications network; the communication session is associated (in a second step of the inventive method) to the data network name in order to provide connectivity towards the further network via the cloud provider infrastructure using the data network name; furthermore the user equipment receives (in a third step of the inventive method) a communication session establishment accept message, transmitted by the control plane function of the telecommunications network; and, the user equipment uses (in a fourth step of the inventive method) the established communication session to access the further network via the user plane function of the telecommunications network. Especially, the communication session establishment request of the user equipment (in a first step of the inventive method) does not necessarily comprise a reference, or an indication, to a data network name (instance) to be used. Furthermore, when the user equipment requests the communication session to be established to or towards the further network, the data network name may not have been yet provisioned or established.

According to the present invention, it is furthermore advantageously possible and preferred that the further network is accessible, using the target network identifier information, only from within the cloud provider infrastructure,
wherein especially the further network is not directly accessible from the outside of the cloud provider infrastructure.

It is thereby advantageously possible to realize and implement the inventive method in a comparatively simple and efficient manner: Even though the further network is not (directly) accessible from the telecommunications network (only by means of using the target network identifier information), it is nevertheless advantageously possible, according to the present invention, that the user equipment is able to get connectivity to the further network.

According to the present invention, it is furthermore advantageously possible and preferred that the communication session is or corresponds to a protocol data unit, PDU, session, and/or wherein the control plane function is or corresponds to the session management function or a session management function instance.

It is thereby advantageously possible to realize and implement the inventive method in a comparatively simple and efficient manner.

Furthermore, it is advantageously possible and preferred according to the present invention that - after provisioning or establishing the data network name - the data network name and the further network as well as its target network identifier information are assigned to each other, wherein especially such assigning is stored in a repository entity or functionality of the telecommunications network, wherein especially such assigning is performed
-- prior to the first step, or
-- subsequent to the first step, especially subsequent to the third step.

It is thereby advantageously possible to efficiently realize and implement the inventive method in a comparatively simple and flexible manner as the assignment of the data network name and the further network as well as its target network identifier information is possible to be performed at different points in time.

Furthermore, it is advantageously possible and preferred according to the present invention that the data network name and the further network and its target network identifier information are assigned to each other, wherein such assigning as well as the provisioning or establishing of the data network name is performed subsequent to the first step, especially subsequent to the third step.
Furthermore, it is advantageously possible and preferred according to the present invention that the data network name associated to the further network provides a different, especially higher, quality of service compared to connectivity via the Internet, such that connectivity towards the further network can be achieved with higher reliability and/or quality compared to over-the-top methods.
Furthermore, it is advantageously possible and preferred according to the present invention that for a given further network, when different user equipments request a communication session to be established to or towards the further network, different data networks providing connectivity towards the further network can be employed for different user equipments, especially where the choice of data network and/or associated quality is based on subscriber or policy information related to one or more user equipments. It is additionally advantageously possible and preferred according to the present invention that if the data network name is not in use or required anymore, e.g. when all user equipments requiring connectivity to the further network deregistered from the network, that the data network instance is un-provisioned, such that resource usage and/or costs, especially the instantiated resources, reserved capacity and/or connectivity required on the side of the cloud provider infrastructure, can be optimized.

It is thereby advantageously possible to realize and implement the inventive method in a comparatively simple and efficient manner.

Furthermore, it is advantageously possible and preferred according to the present invention that the cloud provider infrastructure comprises a cloud controller entity or functionality and/or a cloud ingress router entity or functionality, wherein provisioning or establishing the data network name and/or assigning or associating the data network name, the further network and its target network identifier information involves contacting, by the telecommunications network, the cloud controller entity or functionality and/or the cloud ingress router entity or functionality, and wherein the cloud ingress router entity is accessible from the telecommunications network via the data network name and forwards data packets between the further network and the telecommunications network.

It is thereby advantageously possible to realize and implement the inventive method in a comparatively simple and efficient manner.

Furthermore, it is advantageously possible and preferred according to the present invention that the target network identifier information is or corresponds to or comprises a universally unique identifier, UUID, information of the further network, wherein especially the target network identifier information comprises an infrastructure identifier information relating to the cloud provider infrastructure, or identifying the cloud provider infrastructure.

It is thereby advantageously possible to realize and implement the inventive method in a comparatively simple and efficient manner.

According to a second aspect, the present invention provides a user equipment for being operated with a telecommunications network, wherein the user equipment is configured to request, while being connected to the telecommunications network, to be connected to or to access a further network, the further network being a virtual network as part of a cloud provider infrastructure and the further network being accessible, from within the cloud provider infrastructure, using a target network identifier information,
wherein, in order for the user equipment to use or to get access to the further network, a data network and associated data network name is required to be provisioned or established at the telecommunications network or between the telecommunications network and the cloud provider infrastructure,
wherein, in order for the user equipment to be connected to or to access the further network, the user equipment is configured such that:
   -- the user equipment requests a communication session to be established to or towards the further network, using the target network identifier information as part of a request message being transmitted, by the user equipment, to the control plane function of the telecommunications network,
   -- the user equipment receives a communication session establishment accept message, transmitted by the control plane function of the telecommunications network,
   -- the user equipment uses the established communication session to access the further network via the user plane function of the telecommunications network after the communication session is associated to the data network name in order to provide connectivity towards the further network via the cloud provider infrastructure using the data network name.

According to a third aspect, the present invention provides a telecommunications network for using a user equipment with the telecommunications network, wherein the user equipment requests, while being connected to the telecommunications network, to be connected to or to access a further network, wherein the telecommunications network comprises a control plane function and a user plane function, wherein the further network is a virtual network as part of a cloud provider infrastructure,
wherein the further network is accessible, from within the cloud provider infrastructure, using a target network identifier information,
wherein, in order for the user equipment to use or to get access to the further network, a data network and associated data network name is required to be provisioned or established at the telecommunications network or between the telecommunications network and the cloud provider infrastructure,
wherein, in order for the user equipment to be connected to or to access the further network, the system or telecommunications network is configured such that:
   -- the telecommunications network receives, from the user equipment, a request message regarding a communication session to be established to or towards the further network, the target network identifier information being part of the request message received by the control plane function of the telecommunications network,
   -- the communication session is associated to the data network and/or data network name in order to provide connectivity towards the further network via the cloud provider infrastructure using the data network name,
   -- the control plane function of the telecommunications network transmits, and the user equipment receives, a communication session establishment accept message,
   -- the established communication session is used, by the user equipment, to access the further network via the user plane function of the telecommunications network.

According to a fourth aspect, the present invention provides a program comprising a computer readable program code which, when executed on a computer and/or on a user equipment and/or on a network node of a telecommunications network, especially a control plane function, or in part on the user equipment and/or in part on the network node of a telecommunications network, especially the control plane function, causes the computer and/or the user equipment and/or the network node of the telecommunications network to perform the inventive method.

According to a fifth aspect, the present invention provides a computer-readable medium comprising instructions which when executed on a computer and/or on a user equipment and/or on a network node of a telecommunications network, especially a control plane function, or in part on the user equipment and/or in part on the network node of a telecommunications network, especially the control plane function, causes the computer and/or the user equipment and/or the network node of the telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

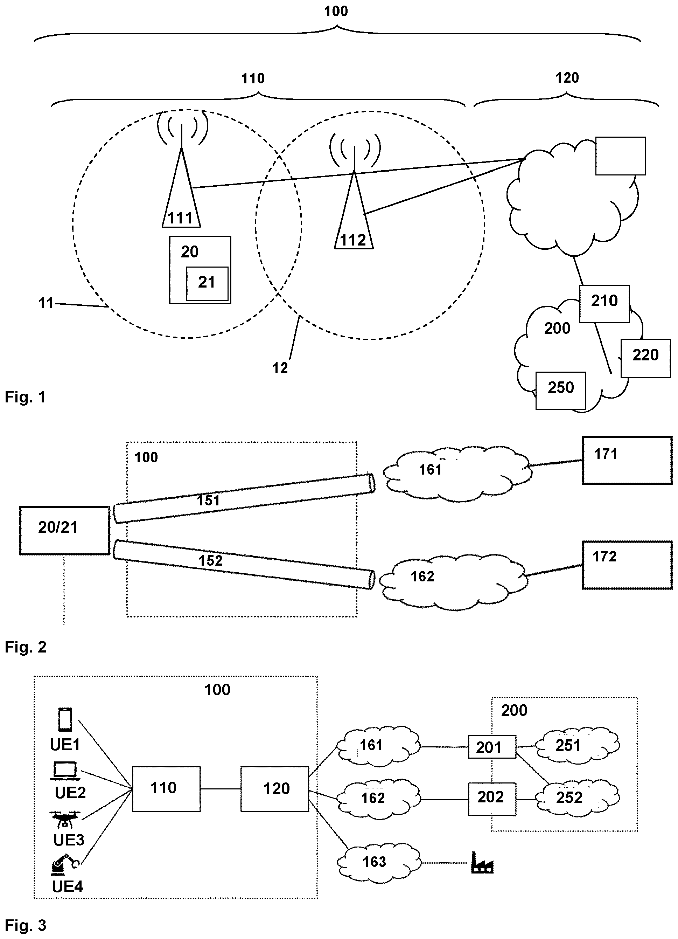

Figure 1 schematically illustrates a telecommunications network comprising an access network, a core network and a user equipment, wherein the core network typically comprises a number of network functions or services, and wherein the telecommunications network is connected to a cloud provider infrastructure comprising a further network being a virtual network as part of the cloud provider infrastructure.
Figure 2 schematically illustrates an example of a data network connectivity of the user equipment (or of an application thereof) using the telecommunications network, i.e. the access network and the core network, the data network connectivity of the user equipment being realized towards a plurality of data networks or data network names.
Figure 3 schematically illustrates different connection possibilities or connectivity possibilities of different user equipments.

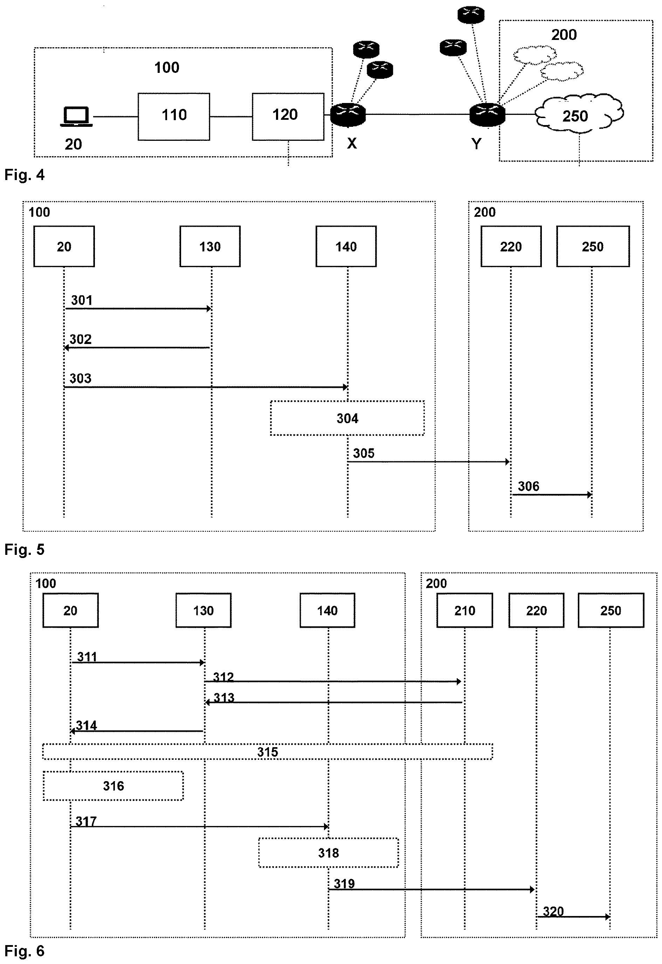

Figure 4 schematically illustrates the example of a user equipment being connected to virtual network where the connectivity to the virtual network already exists.
Figure 5 schematically illustrates a communication diagram between the user equipment, a control plane function of the telecommunications network, a user plane function of the telecommunications network, and the cloud provider infrastructure in case that the connectivity to the virtual network already exists.
Figure 6 schematically illustrates a communication diagram between the user equipment, a control plane function of the telecommunications network, a user plane function of the telecommunications network, and the cloud provider infrastructure in case that the connectivity to the virtual network does not yet exists, i.e. needs to be established.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 is schematically shown. The telecommunications network 100, especially the core network 120, typically comprises a number of network functions or services. The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 is connected to the telecommunications network 100 via a radio interface to the first base station entity 111. The user equipment 20 is typically, but not necessarily, mobile i.e. able to move with respect to the (typically, but not necessarily, static) radio cells 11, 12 or corresponding base station entities 111, 112 of the access network 110. According to the present invention, the user equipment 20 typically comprises an application 21 (schematically depicted, in Figure 1, as part of the user equipment 20) typically running on the user equipment 20, i.e. the user equipment 20 typically runs or executes an operating system (such as a mobile (devices) operating system, e.g., android, iOS, iPadOS, etc.), and the application 21 is running on the operating system; alternatively, the application 21 might also be a lower level application not running on or as part of the operating system but as part of, e.g., the subscriber identity module of the user equipment 20. According to the present invention, the telecommunications network 100 is connected to a cloud provider infrastructure 200 comprising a further network 250 being a virtual network as part of the cloud provider infrastructure 200. Furthermore, the cloud provider infrastructure 200 is represented, in Figure 1, as also comprising a cloud controller entity or functionality 210 and a cloud ingress router entity or functionality 220.

In Figure 2, an example of a data network connectivity of the user equipment 20 (or of its application 21) is schematically shown, wherein the user equipment 20 (the application 21) uses the telecommunications network 100 - i.e. the access network and the core network, especially realized as a 5G system - to be provided, e.g., with services 171, 172, the data network connectivity of the user equipment 20 (the application 21) being realized towards a plurality of data networks or data network names 161, 162 using communication sessions, 151, 152, especially packet data unit sessions 151, 152. Such a data network connectivity of user equipments is already possible to be realized in currently known telecommunications networks; e.g. the connectivity to the data networks 161, 162 is exposed to the user equipment 20 and/or its application 21 as network interfaces, for example with the user equipment 20 being addressable, within the data networks 161, 162, via, e.g., an IP address, respectively (e.g. IP address 10.10.10.42 assigned to the user equipment 20 (or application 21) on the first packet data unit session 151 and usable by the first data network 161, and another IP address 192.168.0.23 assigned to the user equipment 20 (or application 21) on the second packet data unit session 152 and usable by the second data network 162). Likewise, the connectivity to the user equipment 20 (or to the application 21) is also exposed, to the first and/or second data networks 161, 162 by means of network addresses, e.g. IP addresses. Hence, a first service 171 is able to be provided, to the user equipment 20 or the application 21 via (or using) the first data network 161 and the first packet data unit session 151, and a second service 172 is able to be provided, to the user equipment 20 or the application 21 via (or using) the second data network 162 and the second packet data unit session 152.

According to the present invention, the telecommunications network 100 is organized or structured - in accordance to current or conventionally known mobile networks - based on a separation between the user equipment 20, the (radio) access network 110 and the core network, which applies, e.g., to 5G systems (5GS), i.e. telecommunications networks according to the 5G standard. The objective is to provide the user equipment 20 with connectivity towards a data network (DN), e.g., the Internet (e.g. such as the data networks 161, 162 shown in Figure 2). In case of the telecommunications network 100 being a mobile communication network (or a cellular network), the user equipment 20 communicates with the radio access network 110 (or its base station entity 111, especially a gNodeB) via a radio interface (Uu interface or reference point), which is used for conveying both signaling information and data traffic. The data network 161, 162 provides connectivity towards services or backend applications 171, 172 (e.g. a backend for an application 21 running on the user equipment 20). Additionally, (network) slicing allows the telecommunications network 100 to be segmented into logical sections (i.e. "slices") which can be accessed by user equipments 20 and be used to offer differentiated services.
Furthermore, both according to the present invention as in currently known networks, such systems typically separate a control plane from a user plane (i.e., signaling traffic and (user) data traffic are separated); the traffic between the user equipment 20 and the telecommunications network 100 is transmitted by means of the communication sessions 151, 152, especially packet data unit sessions 151, 152, which are anchored at a PDU session Anchor (PSA), especially the user plane function (UPF) in the case of the telecommunications network 100 being a 5G network (especially using the N3 interface or reference point between the gNB and the UPF). Similarly, an access and mobility management function (AMF) acts as a signaling anchor (so-called N1/N2 interface) for control plane traffic.
In order for the user equipment 20 being able to have connectivity towards the services 171, 172, the data network 161, 162 - or, a corresponding data network name - is required to be established as well as a corresponding communication session, especially a packet data unit session 151, 152 needs to be established.

Especially in case of a conventionally known 5G system, such packet data unit session establishment procedure (according to 3GPP TS 23.502, clause 4.3.2.2.1.) comprises, in a first part the following procedures: The procedure assumes that the user equipment has already registered on the AMF thus (unless the user equipment is emergency registered) the AMF has already retrieved the user subscription data from the unified data management (UDM); the user equipment transmits (to the access and mobility management function) a non-access stratum message comprising:
-- the corresponding (requested) S-NSSAI(s),
-- the user equipment requested data network name DNN,
-- the PDU Session ID,
-- a request type information,
-- an old PDU Session ID,
-- an N1 SM (session management) container (comprising the PDU session establishment request, and perhaps a port management information container). In order to establish a new PDU session, the user equipment generates a new PDU session ID, and the user equipment initiates the user equipment requested PDU session establishment procedure by the transmission of a NAS message containing a PDU session establishment request within the N1 SM container.

Hence, in currently known telecommunications networks and as already mentioned, in order to provide a user equipment with connectivity towards a data network, the user equipment communicates with the access network and with the core network, and the data network provides connectivity towards services by means of a packet data unit session (PDU session), i.e. the telecommunications network, e.g. a 5G system, provides the packet data unit session as a 'pipe' realizing connectivity to a given data network. In case the further network (or the service connected by means of the packet data unit session) is part of a cloud provider infrastructure such resources within a virtual network, or the virtual network itself are typically not accessible by the user equipment and via the packet data unit session and the data network without prior or previous knowledge and/or prior configuration steps; this is explained in the following:
In a typical setup of a cloud-based virtual network, such a virtual network, e.g., comprises a plurality of virtual machines, a software as a service database and/or a Kubernetes cluster (k8s cluster). The associated or corresponding cloud provider infrastructure, e.g., comprises a load balancer having (or being related to) a public IP address (connected to the internet) by means of which IP address an internet user can access the load balancer (i.e. the cloud provider infrastructure) via its public IP address but the user could not access the virtual network itself. Furthermore, the cloud provider infrastructure, e.g., comprises a VPN gateway towards a corporate network (that also comprises a VPN gateway terminating the VPN tunnel on its other side); a corporate user is able to route traffic between the virtual network and the corporate network via the VPN tunnel. However, such connectivity to the virtual network is only possible as the VPN tunnel is (already) established; a virtual network or resources within a virtual network cannot be accessed directly from the "outside" (i.e. the internet) unless a given resource is allocated a public IP address (in this case the given resource can be addressed via the internet) or via the VPN tunnel (by means of which the virtual network can be connected to other networks at the other side of the VPN tunnel by means of routing mechanisms); furthermore, similar methods exist to connect different virtual networks within a cloud provider or cloud provider infrastructure.

Alternatively or cumulatively in terms of connectivity, it is also possible to implement connectivity towards a cloud or towards a virtual network via private connectivity: this is a preferred option when stringent performance requirements apply or when it is not desired that the traffic, even if in encrypted form, runs through the internet.

Hence, it is possible to connect to a virtual network via a VPN via the Internet, via dedicated connectivity and also using both methods simultaneously (e.g. for redundancy and/or cost-effective load balancing); an alternative in-between these two solutions would be reaching the cloud provider or virtual network not via the Internet but rather via a private peering point such that the VPN endpoints can be achieved more reliably as via the Internet.

In this respect, Figure 3 schematically and exemplarily shows different connection possibilities or connectivity possibilities of (exemplary) different user equipments UE1, UE2, UE3, UE4 (being part of or connected to the telecommunications network 100), and being potentially linked to (or provided connectivity towards) a first virtual network 251 or a second virtual network 252 of a cloud provider infrastructure 200 via either a VPN endpoint 201 of the cloud provider infrastructure 200 or a direct connection endpoint 202 of the cloud provider infrastructure 200:
In currently known telecommunications networks, a user equipments UE1, UE2, UE3, UE4 (e.g. mobile devices but this is also applicable to a fixed-network device connecting via a 3GPP-based system) can request (and be provided with) connectivity via a PDU session establishment (request) to a given DNN 161, 162, 163 through a given slice (S-NSSAI/DNN pair). E.g., UE1 might require connectivity to the first virtual network 251; UE2 might require access to the second virtual network 252; UE3 might require low latency and access to the second virtual network 252; and UE4 might require low latency and access to the enterprise network (local network) of the enterprise, as well as the first virtual network 251. In order to realize such a connectivity scenario, the network is able to be configured such that: the first data network name 161 is configured to provide access to the Internet; the second data network name 162 is configured to provide direct access to the second virtual network 252; the third data network name 163 is configured to provide connectivity to the local network; A default (network) slice providing connectivity to the first and second data network name 161, 162 is enabled for UE1 and UE2; additionally a prioritized (network) slice (e.g. reserved RAN resources), providing connectivity to the first, second and third data network name 161, 162, 163, is enabled for UE3 and UE4; each one of the UEs is configured to request appropriate PDU session(s) for a Slice/DNN pair providing access to the correct data network name (i.e. corresponding to the above mentioned exemplary scenario). For the case of the first data network name 161, the application (on the respective user equipment) will then have to additionally start a VPN client on top of the PDU Session with appropriate (reconfiguration so that the connection with the cloud provider's virtual network 251, 252 can be established. Hence, such a connectivity scenario is possible to realize in a conventionally known telecommunications network, however keeping track of all those (potentially changing) configurations might be rather complex.

As already said, according to the present invention, it is advantageously possible that a user equipment is enabled to request connectivity to a specific networking resource or resource provider (i.e. to a further network that is accessible from within a cloud provider infrastructure) using a target network identifier information as opposed to the paradigm, in conventionally known telecommunications networks, of necessarily requesting connectivity to a combination of data network name (DNN) and/or a network slice.

Hence, also according to the present invention, the user equipment 20 is connected to the telecommunications network 100, and, while being connected, requests to be connected to or to access the further network 250 - i.e. the virtual network being part of the cloud provider infrastructure 200 and being accessible, from within the cloud provider infrastructure 200, using its target network identifier information 251. Hereinafter, the further network 250 is also called virtual network 250. Also according to the present invention, it is assumed that, in order for the user equipment 20 to use or to get access to the further network 250, a data network and associated data network name is required to be provisioned or established at the telecommunications network 100 or between the telecommunications network 100 and the cloud provider infrastructure 200, however, such data network name does not necessarily need to be instantiated (or exist) prior to or at the time of the connectivity request of the user equipment 20. According to the present invention, the steps required for the user equipment 20 to be provided with connectivity towards the further network 250 comprise
-- the user equipment 20 requesting a communication session to be established to or towards the further network 250, using the target network identifier information 251 as part of a request message being transmitted, by the user equipment 20, to the control plane function 130 of the telecommunications network 100,
-- the communication session being associated to the data network name in order to provide connectivity towards the further network 250 via the cloud provider infrastructure 200 using the data network name,
-- the user equipment 20 receiving a communication session establishment accept message, transmitted by the control plane function 130 of the telecommunications network 100, and
-- the user equipment 20 using the established communication session to access the further network 250 via the user plane function 140 of the telecommunications network 100.

Hence, there is - according to the present invention - not necessarily a need for the user equipment 20 to transmit a data network (name) identifier or corresponding information as part of its request to establish the communication session via which the user equipment 20 can subsequently establish a communication with the cloud provider infrastructure 200, neither for the user equipment 20 to store addressing information of control and/or user plane elements of the cloud provider infrastructure 200. Thus, the complexity for providing the user equipment 20 with connectivity to the further network 250 or for providing access to the further network 250 is able to be reduced according to the present invention: the user equipment 20 only needs to know the network it wants to connect to (i.e. the target network identifier information), indicate it to the telecommunications network 100, and the rest is taken care of. That is, there is no need for the user equipment 20 to be aware of any information related to an underlying data network (name), an underlying slice (identifier) and/or any other parameter such as quality of service that are used to provide connectivity between the telecommunications network 100 and the cloud provider infrastructure 200 so as to reach the further network 250. Thus, the user equipment 20 (or the application 21 (running or being executed on the user equipment 20) triggering the user equipment 20) triggers a communication session establishment (especially a packet data unit session establishment) targeting the further network 250 that is not directly accessible (via the telecommunications network 100 the user equipment 20 is attached to); the user equipment 20 is only required to know the target network identifier information, i.e. the virtual network where connectivity is required to - not how to achieve such connectivity. According to the present invention, this is achieved by the user equipment 20 including a virtual network identifier, i.e. the target network identifier information 251, in the communication session establishment request, typically a PDU session establishment request. Based on the subscriber and/or policy data relating to the user equipment 20 (e.g. whether the user equipment 20 is allowed to get said connectivity, what quality-of-service level is to be applied or is the user equipment 20 allowed to, via what network slice should the connectivity be realized), the telecommunications network 100 (to which the user equipment 20 is connected to) either associates the communication session (or PDU session) to an existing data network name (DNN) and/or network slice (S-NSSAI) via which this information can be routed, or the telecommunications network provisions connectivity to the respective further network. The user equipment 20 then gets a communication session accept message and can transmit and/or receive data as normally done via communication (PDU) sessions with the exception that in this case the connectivity is typically not (or not necessarily) requested towards a DNN/S-NSSAI but rather towards the further network 250 being a virtual network.
According to first variants of the present invention, the connectivity (of the core network 120, or parts thereof) to the virtual network 250 already exists (at the time of the connection request of the user equipment 20), wherein according to second variants of the present invention, the connectivity to the virtual network 250 does not yet exists, i.e. needs to be established (at the time of the connection request of the user equipment 20).

Figures 4 and 5 relate to the first variants of the present invention. In Figure 4, the example of the user equipment 20 being connected (via the access network 110 and core network 120 of the telecommunications network 100) to the virtual network 250 (as part of the cloud provider infrastructure 200) is schematically shown where the connectivity (of the core network 120, or parts thereof) to the virtual network 250 already exists: The user equipment 20 requests the communication session establishment by means of a request message comprising (especially instead of a DNN/S-NSSAI information) the target network identifier information 251 of the virtual network 250 in order to get connectivity to the further network 250. Especially, the requested target network identifier information 251 of the virtual network 250 is (already) mapped, by the core network 120, to a data network (name) (and/or to a S-NSSAI) that are configured to provide access to the specific requested (pre-configured) virtual network 250; e.g. traffic from the user equipment 20 is directed to classless inter-domain routing (CIDR) 10.0.0.0/8. The corresponding data network is e.g. connected via interface X, and the virtual network router interface via interface Y. Routing tables are typically configured, e.g. via border gateway protocol (BGP), to route traffic to 10.0.0.0/8 via interface Y. On the side of the cloud provider infrastructure 200, incoming traffic (at interface Y) is routed based on configured routing tables (incoming interface, destination CIDR) to a virtual network within the cloud provider infrastructure 200 (other virtual networks might use the same (or overlapping) CIDR(s) but such virtual network would use other interfaces. Hence, in case that the connectivity of the telecommunications network 100 to the virtual network 250 already exists, when receiving (from the user equipment 20) a request including a virtual network identifier (or target network identifier information 251), the core network 120 maps the target user plane connectivity to a given existing connectivity, that is, a data network (name). That is, using the virtual network identifier (target network identifier information 251) (as part of the connectivity request transmitted by the user equipment 20) also results - just as the user equipment 20 (and any other user equipment requiring connectivity to the further network 250) having been configured to map a connectivity request towards the further network 250 to a request to a given DNN or DNN/S-NSSAI pair - in the user equipment 20 being connected (or getting connectivity) to the further network 250 without the specific mapping needing to be configured and maintained on a user equipment 20 requiring connectivity to the further network 250. Whether a specific user plane function (UPF) / session management function (SMF) is used (e.g. reserved for a given slice ID, S-NSSAI) can also be taken care of by the core network 120, i.e. the user equipment 20 can be assigned a higher-QoS network function based on a mapping configured in the core network 120 and/or based on subscription information related to the user equipment 20 or credentials user by the user equipment 20.
In the example of Figure 4, the virtual network 250 (or further network 250) uses a CIDR of 10.0.0.0/8, which is routable by the router on the core network 120 and cloud provider side towards the configured virtual network 250. While other virtual networks (as part of the cloud provider infrastructure 200) may (and most probably do) use exactly the same CIDR, the combination of input interface (i.e. interfaces X and/or Y) and CIDR is unique, hence the traffic can be routed by a specific link (e.g. realized via a VLAN) between the telecommunications network 100 on the one hand, and the cloud provider infrastructure 200 on the other hand. Similar means are used by the cloud provider (i.e. the cloud provider infrastructure 200) to route traffic towards the correct virtual network 250.

In Figure 5, a communication diagram, especially regarding the flow of user plane data, between the user equipment 20, a control plane function 130 of the telecommunications network 100 (or of its core network 120), a user plane function 140 of the telecommunications network 100 (or of its core network 120), and the cloud provider infrastructure 200 is schematically shown in case that the connectivity to the virtual network 250 already exists. E.g. the connectivity of the core network 120, or of parts thereof, to the virtual network 250 already exists due to a pre-configured routed connection where traffic from a given router interface can be directly routed to an IP range within the virtual network 250 - then the core network 120 does not need to establish a new connectivity towards the virtual network 250.

In a first processing step 301, the user equipment requests a PDU Session to the further network 250 (or the virtual network 250). In a second processing step 302, a PDU session establishment accept message is transmitted to the user equipment 20, especially comprising security parameters. In a third processing step 303, a data packet is sent via user plane towards the endpoint in the virtual network 250 which means that such a data packet is transported, within the telecommunications network 100, to the user plane function 140. In a fourth processing step 304, the user plane function 140 forwards the data packet to the cloud ingress router entity or functionality 220 of the cloud provider infrastructure 200. In a fifth processing step 305, the data packet is sent via user plane to the cloud ingress router entity or functionality 220, and in a sixth processing step 306, the data packet is sent to the virtual network 250.

In Figure 6, a communication diagram, especially regarding the flow of user plane data, between the user equipment 20, a control plane function 130 of the telecommunications network 100 (or of its core network 120), a user plane function 140 of the telecommunications network 100 (or of its core network 120), and the cloud provider infrastructure 200 is schematically shown in case that the connectivity to the virtual network 250 does not yet exists, i.e. needs to be established. The provision of connectivity to the virtual network 250 can be accomplished also assuring that end-to-end (E2E) security can be achieved. It may not be desired by the subscriber that the information exchanged between the user equipment 20 and the virtual network 250 is visible and/or modifiable and hence encryption and/or data protection may be desirable.

For this depiction, it is advantageous to separate the network functions into control plane (signaling) functionality and user plane (data traffic) functionality. In a first processing step 311, the PDU session establishment request (transmitted by the user equipment 20) is received by the control plane function 130 of the core network 120. In a 5G network that would be the SM (session management) NAS (non-access stratum) container sent by the user equipment 20 via the access and mobility management function (AMF), transparently forwarded by the access network 110 towards the access and mobility management function via the NG-AP interface. This message triggers a request (cf. the second processing step 312 in Figure 6) for connectivity to virtual network 250 towards the cloud provider's control plane (cloud controller entity or functionality 210), hereinafter also named "cloud controller". The following information is considered to be in the request for connectivity: the virtual network identifier (i.e. the target network identifier information 251), the endpoint address of the user plane function (in a 5G network, that would be a user plane function) towards which the cloud provider can send user plane (data packets); information regarding the user equipment 20 that requested the connectivity. In a third processing step 313, the cloud controller 210 sends back: an endpoint towards which the user plane function can send traffic to; additional security parameters the user equipment 20 can use to setup data protection for the data being sent via the network towards the virtual network 250, e.g. encryption, integrity protection. In a fourth processing step 314, the user equipment 20 receives the PDU session accept message and any additional parameters. In a fifth processing step 315, security negotiation can be established between the user equipment 20 and the cloud controller 210; existing means can be re-used for this. In a sixth processing step 316, the user equipment 20 can then protect a data packet as per any negotiated parameters, e.g. encrypt the data packet so that its content is not visible to the telecommunications network 100, add checksums/signatures so that it cannot be modified. In a seventh processing step 317, the data packet is sent via user plane towards endpoint in the virtual network 250, i.e. to the user plane function 140. In an eighth processing step 318 and a ninth processing step 319, the user plane function 140 forwards the packet to the ingress router 220 of the cloud provider infrastructure 200 as per the endpoints negotiated in the second and third processing steps 312, 313. The packet is then received by the ingress router 220, which then forwards the data packet - in a tenth processing step 320 - towards the remote endpoint in the virtual network 250.

According to the present invention, In order to help the telecommunications network 100 to map the target network identifier information 251 (or virtual network identifier) to a given cloud provider (i.e. cloud provider infrastructure 200), it is especially preferred to structure the virtual network identifier to also contain a provider identifier, which the network can then map to a given cloud provider/cloud controller. The structure of the target network identifier information 251 (or Vnet Identifier) then also comprises an indication to the cloud provider. While a virtual network within a cloud provider (or cloud provider infrastructure 200) is typically (uniquely, hence - in principle - sufficiently) identified with a universally unique identifier (UUID), it may also be advantageous to allow the user equipment 20 to further indicate to what provider the UUID (i.e. the target network identifier information 251) belongs to. That can be accomplished by either letting the user equipment 20 indicate a cloud provider identifier (e.g. a string, identifier or UUID) or using a virtual network identifier (target network identifier information 251) containing a cloud provider identifier; examples of such realizations include, e.g.: provider-name-00112233-4455-6677-c899-aabbccddeeff (string-based); 0001-00112233-4455-6677-c899-aabbccddeeff (identifier-based).

## Claims

1. Method for using a user equipment (20) with a telecommunications network (100), wherein the user equipment (20) requests, while being connected to the telecommunications network (100), to be connected to or to access a further network (250), wherein the telecommunications network (100) comprises a control plane function (130) and a user plane function (140), wherein the further network (250) is a virtual network as part of a cloud provider infrastructure (200),
wherein the further network (250) is accessible, from within the cloud provider infrastructure (200), using a target network identifier information (251), wherein, in order for the user equipment (20) to use or to get access to the further network (250), a data network and associated data network name is required to be provisioned or established at the telecommunications network (100) or between the telecommunications network (100) and the cloud provider infrastructure (200),
wherein, in order for the user equipment (20) to be connected to or to access the further network (250), the method comprises the following steps:
-- in a first step, the user equipment (20) requests a communication session to be established to or towards the further network (250), using the target network identifier information (251) as part of a request message being transmitted, by the user equipment (20), to the control plane function (130) of the telecommunications network (100),
-- in a second step, the communication session is associated to the data network and/or data network name in order to provide connectivity towards the further network (250) via the cloud provider infrastructure (200) using the data network,
-- in a third step, the user equipment (20) receives a communication session establishment accept message, transmitted by the control plane function (130) of the telecommunications network (100),
-- in a fourth step, the user equipment (20) uses the established communication session to access the further network (250) via the user plane function (140) of the telecommunications network (100).

2. Method according to claim 1, wherein the further network (250) is accessible, using the target network identifier information (251), only from within the cloud provider infrastructure (200),
wherein especially the further network (250) is not directly accessible from the outside of the cloud provider infrastructure (200).

3. Method according to one of the preceding claims, wherein the communication session is or corresponds to a protocol data unit, PDU, session, and/or wherein the control plane function (130) is or corresponds to the session management function or a session management function instance.

4. Method according to one of the preceding claims, wherein - after provisioning or establishing the data network- the data network and the further network (250) as well as its target network identifier information (251) are assigned to each other,
wherein especially such assigning is stored in a repository entity or functionality of the telecommunications network (100),
wherein especially such assigning is performed
-- prior to the first step, or
-- subsequent to the first step, especially subsequent to the third step.

5. Method according to one of the preceding claims, wherein the data network and the further network (250) and/or the data network name and its target network identifier information (251) are assigned to each other, wherein such assigning as well as the provisioning or establishing of the data network is performed subsequent to the first step, especially subsequent to the third step.

6. Method according to one of the preceding claims, wherein the cloud provider infrastructure (200) comprises a cloud controller entity or functionality (210) and/or a cloud ingress router entity or functionality (220), wherein provisioning or establishing the data network and/or assigning or associating the data network, the further network (250) and its target network identifier information (251) involves contacting, by the telecommunications network (100), the cloud controller entity or functionality (210) and/or the cloud ingress router entity or functionality (220).

7. Method according to one of the preceding claims, wherein the target network identifier information (251) is or corresponds to or comprises a universally unique identifier, UUID, information of the further network (250),
wherein especially the target network identifier information (251) comprises an infrastructure identifier information relating to the cloud provider infrastructure (200), or identifying the cloud provider infrastructure (200).

8. User equipment (20) for being operated with a telecommunications network (100), wherein the user equipment (20) is configured to request, while being connected to the telecommunications network (100), to be connected to or to access a further network (250), the further network (250) being a virtual network as part of a cloud provider infrastructure (200) and the further network (250) being accessible, from within the cloud provider infrastructure (200), using a target network identifier information (251),
wherein, in order for the user equipment (20) to use or to get access to the further network (250), a data network and associated data network name is required to be provisioned or established at the telecommunications network (100) or between the telecommunications network (100) and the cloud provider infrastructure (200),
wherein, in order for the user equipment (20) to be connected to or to access the further network (250), the user equipment (20) is configured such that:
-- the user equipment (20) requests a communication session to be established to or towards the further network (250), using the target network identifier information (251) as part of a request message being transmitted, by the user equipment (20), to the control plane function (130) of the telecommunications network (100),
-- the user equipment (20) receives a communication session establishment accept message, transmitted by the control plane function (130) of the telecommunications network (100),
-- the user equipment (20) uses the established communication session to access the further network (250) via the user plane function (140) of the telecommunications network (100) after the communication session is associated to the data network and/or data network name in order to provide connectivity towards the further network (250) via the cloud provider infrastructure (200) using the data network.

9. Telecommunications network (100) for using a user equipment (20) with the telecommunications network (100), wherein the user equipment (20) requests, while being connected to the telecommunications network (100), to be connected to or to access a further network (250), wherein the telecommunications network (100) comprises a control plane function (130) and a user plane function (140), wherein the further network (250) is a virtual network as part of a cloud provider infrastructure (200),
wherein the further network (250) is accessible, from within the cloud provider infrastructure (200), using a target network identifier information (251),
wherein, in order for the user equipment (20) to use or to get access to the further network (250), a data network and associated data network name is required to be provisioned or established at the telecommunications network (100) or between the telecommunications network (100) and the cloud provider infrastructure (200),
wherein, in order for the user equipment (20) to be connected to or to access the further network (250), the system or telecommunications network (100) is configured such that:
-- the telecommunications network (100) receives, from the user equipment (20), a request message regarding a communication session to be established to or towards the further network (250), the target network identifier information (251) being part of the request message received by the control plane function (130) of the telecommunications network (100),
-- the communication session is associated to the data network and/or data network name in order to provide connectivity towards the further network (250) via the cloud provider infrastructure (200) using the data network,
-- the control plane function (130) of the telecommunications network (100) transmits, and the user equipment (20) receives, a communication session establishment accept message,
-- the established communication session is used, by the user equipment (20), to access the further network (250) via the user plane function (140) of the telecommunications network (100).

10. Program comprising a computer readable program code which, when executed on a computer and/or on a user equipment (20) and/or on a network node of a telecommunications network (100), especially a control plane function (130), or in part on the user equipment (20) and/or in part on the network node of a telecommunications network (100), especially the control plane function (130), causes the computer and/or the user equipment (20) and/or the network node of the telecommunications network (100) to perform a method according one of claims 1 to 7.

11. Computer-readable medium comprising instructions which when executed on a computer and/or on a user equipment (20) and/or on a network node of a telecommunications network (100), especially a control plane function (130), or in part on the user equipment (20) and/or in part on the network node of a telecommunications network (100), especially the control plane function (130), causes the computer and/or the user equipment (20) and/or the network node of the telecommunications network (100) to perform a method according one of claims 1 to 7.

## Patentansprüche

1. Verfahren zum Verwenden einer Benutzerausrüstung (20) mit einem Telekommunikationsnetz (100), wobei die Benutzerausrüstung (20), während sie mit dem Telekommunikationsnetz (100) verbunden ist, anfordert, mit einem weiteren Netz (250) verbunden zu werden oder darauf zuzugreifen, wobei das Telekommunikationsnetz (100) eine Steuerungsebenenfunktion (130) und eine Benutzerebenenfunktion (140) umfasst, wobei das weitere Netz (250) ein virtuelles Netz als Teil einer Cloud-Provider-Infrastruktur (200) ist,
wobei das weitere Netz (250) von innerhalb der Cloud-Provider-Infrastruktur (200) heraus unter Verwendung einer Zielnetzkennungsinformation (251) zugänglich ist,
wobei, damit die Benutzerausrüstung (20) das weitere Netz (250) nutzen oder Zugriff darauf erhalten kann, ein Datennetz und ein zugehöriger Datennetzname in dem Telekommunikationsnetz (100) oder zwischen dem Telekommunikationsnetz (100) und der Cloud-Provider-Infrastruktur (200) bereitgestellt oder eingerichtet werden müssen,
wobei, damit die Benutzerausrüstung (20) mit dem weiteren Netz (250) verbunden werden oder darauf zugreifen kann, das Verfahren die folgenden Schritte umfasst:
- in einem ersten Schritt fordert die Benutzerausrüstung (20) an, dass eine Kommunikationssitzung zu dem weiteren Netz (250) oder in Richtung des weiteren Netzes (250) aufgebaut wird, wobei die Zielnetzkennungsinformation (251) als Teil einer Anforderungsnachricht verwendet wird, die durch die Benutzerausrüstung (20) an die Steuerungsebenenfunktion (130) des Telekommunikationsnetzes (100) gesendet wird,
- in einem zweiten Schritt wird die Kommunikationssitzung mit dem Datennetz und/oder dem Datennetznamen verknüpft, um über die Cloud-Provider-Infrastruktur (200) unter Verwendung des Datennetzes Konnektivität in Richtung des weiteren Netzes (250) bereitzustellen,
- in einem dritten Schritt empfängt die Benutzerausrüstung (20) eine Kommunikationssitzungsaufbau-Akzeptanznachricht, die durch die Steuerungsebenenfunktion (130) des Telekommunikationsnetzes (100) gesendet wird,
- in einem vierten Schritt verwendet die Benutzerausrüstung (20) die aufgebaute Kommunikationssitzung, um über die Benutzerebenenfunktion (140) des Telekommunikationsnetzes (100) auf das weitere Netz (250) zuzugreifen.

2. Verfahren nach Anspruch 1, wobei das weitere Netz (250) unter Verwendung der Zielnetzkennungsinformation (251) nur von innerhalb der Cloud-Provider-Infrastruktur (200) heraus zugänglich ist,
wobei insbesondere das weitere Netzwerk (250) nicht von außerhalb der Cloud-Provider-Infrastruktur (200) her direkt zugänglich ist.

3. Verfahren nach einem der vorangehenden Ansprüche, wobei die Kommunikationssitzung eine Protokolldateneinheit (Protocol Data Unit, PDU)-Sitzung ist oder einer solchen entspricht, und/oder wobei die Steuerungsebenenfunktion (130) die Sitzungsmanagementfunktion oder eine Sitzungsmanagementfunktionsinstanz ist oder einer solchen entspricht.

4. Verfahren nach einem der vorangehenden Ansprüche, wobei - nach dem Bereitstellen oder Aufbauen des Datennetzes - das Datennetz und das weitere Netz (250) sowie dessen Zielnetzkennungsinformation (251) einander zugewiesen werden,
wobei insbesondere ein solches Zuweisen in einer Repositoriumentität oder -funktionalität des Telekommunikationsnetzes (100) gespeichert wird,
wobei insbesondere ein solches Zuweisen durchgeführt wird:
- vor dem ersten Schritt oder
- im Anschluss an den ersten Schritt, insbesondere im Anschluss an den dritten Schritt.

5. Verfahren nach einem der vorangehenden Ansprüche, wobei das Datennetz und das weitere Netz (250) und/oder der Datennetzname und dessen Zielnetzkennungsinformation (251) einander zugewiesen werden, wobei ein solches Zuweisen sowie das Bereitstellen oder Aufbauen des Datennetzes im Anschluss an den ersten Schritt, insbesondere im Anschluss an den dritten Schritt, durchgeführt werden.

6. Verfahren nach einem der vorangehenden Ansprüche, wobei die Cloud-Provider-Infrastruktur (200) eine Cloud-Controller-Entität oder -Funktionalität (210) und/oder eine Cloud-Eintrittsrouterentität oder -funktionalität (220) umfasst, wobei das Bereitstellen oder Aufbauen des Datennetzes und/oder das Zuweisen oder Verknüpfen des Datennetzes, des weiteren Netzes (250) und dessen Zielnetzkennungsinformation (251) das Kontaktieren, durch das Telekommunikationsnetz (100), der Cloud-Controller-Entität oder -Funktionalität (210) und/oder der Cloud-Eintrittsrouterentität oder -Funktionalität (220) umfasst.

7. Verfahren nach einem der vorangehenden Ansprüche, wobei die Zielnetzkennungsinformation (251) eine universell eindeutige Kennungs (Universally Unique Identifier, UUID)-Information des weiteren Netzes (250) ist oder einer solchen entspricht oder sie umfasst,
wobei insbesondere die Zielnetzkennungsinformation (251) eine Infrastrukturkennungsinformation umfasst, die sich auf die Cloud-Provider-Infrastruktur (200) bezieht oder die Cloud-Provider-Infrastruktur (200) identifiziert.

8. Benutzerausrüstung (20) zum Betreiben mit einem Telekommunikationsnetz (100), wobei die Benutzerausrüstung (20) dazu eingerichtet ist, während sie mit dem Telekommunikationsnetz (100) verbunden ist, anzufordern, mit einem weiteren Netz (250) verbunden zu werden oder auf dieses zuzugreifen, wobei das weitere Netz (250) ein virtuelles Netz als Teil einer Cloud-Provider-Infrastruktur (200) ist und das weitere Netz (250) von innerhalb der Cloud-Provider-Infrastruktur (200) heraus unter Verwendung einer Zielnetzkennungsinformation (251) zugänglich ist, wobei, damit die Benutzerausrüstung (20) das weitere Netz (250) nutzen oder Zugriff darauf erhalten kann, ein Datennetz und ein zugehöriger Datennetzname in dem Telekommunikationsnetz (100) oder zwischen dem Telekommunikationsnetz (100) und der Cloud-Provider-Infrastruktur (200) bereitgestellt oder eingerichtet werden müssen,
wobei, damit die Benutzerausrüstung (20) mit dem weiteren Netz (250) verbunden werden oder darauf zugreifen kann, die Benutzerausrüstung (20) so eingerichtet ist, dass:
- die Benutzerausrüstung (20) anfordert, dass eine Kommunikationssitzung zu dem weiteren Netz (250) oder in Richtung des weiteren Netzes (250) aufgebaut wird, wobei die Zielnetzkennungsinformation (251) als Teil einer Anforderungsnachricht verwendet wird, die durch die Benutzerausrüstung (20) an die Steuerungsebenenfunktion (130) des Telekommunikationsnetzes (100) gesendet wird,
- die Benutzerausrüstung (20) eine Kommunikationssitzungsaufbau-Akzeptanznachricht empfängt, die durch die Steuerungsebenenfunktion (130) des Telekommunikationsnetzes (100) gesendet wird,
- die Benutzerausrüstung (20) die aufgebaute Kommunikationssitzung verwendet, um über die Benutzerebenenfunktion (140) des Telekommunikationsnetzes (100) auf das weitere Netz (250) zuzugreifen, nachdem die Kommunikationssitzung mit dem Datennetz und/oder dem Datennetznamen verknüpft wurde, um über die Cloud-Provider-Infrastruktur (200) unter Verwendung des Datennetzes Konnektivität in Richtung des weiteren Netzes (250) bereitzustellen.

9. Telekommunikationsnetz (100) zum Verwenden einer Benutzerausrüstung (20) mit dem Telekommunikationsnetz (100), wobei die Benutzerausrüstung (20), während sie mit dem Telekommunikationsnetz (100) verbunden ist, anfordert, mit einem weiteren Netz (250) verbunden zu werden oder darauf zuzugreifen, wobei das Telekommunikationsnetz (100) eine Steuerungsebenenfunktion (130) und eine Benutzerebenenfunktion (140) umfasst, wobei das weitere Netz (250) ein virtuelles Netz als Teil einer Cloud-Provider-Infrastruktur (200) ist,
wobei das weitere Netz (250) von innerhalb der Cloud-Provider-Infrastruktur (200) heraus unter Verwendung einer Zielnetzkennungsinformation (251) zugänglich ist, wobei, damit die Benutzerausrüstung (20) das weitere Netz (250) nutzen oder Zugriff darauf erhalten kann, ein Datennetz und ein zugehöriger Datennetzname in dem Telekommunikationsnetz (100) oder zwischen dem Telekommunikationsnetz (100) und der Cloud-Provider-Infrastruktur (200) bereitgestellt oder eingerichtet werden müssen,
wobei, damit die Benutzerausrüstung (20) mit dem weiteren Netz (250) verbunden werden oder darauf zugreifen kann, das System oder Telekommunikationsnetz (100) so eingerichtet ist, dass:
- das Telekommunikationsnetz (100) von der Benutzerausrüstung (20) eine Anforderungsnachricht bezüglich einer Kommunikationssitzung empfängt, die zu oder in Richtung des weiteren Netzes (250) aufgebaut werden soll, wobei die Zielnetzkennungsinformation (251) Teil der Anforderungsnachricht ist, die durch die Steuerungsebenenfunktion (130) des Telekommunikationsnetzes (100) empfangen wird,
- die Kommunikationssitzung mit dem Datennetz und/oder dem Datennetznamen verknüpft wird, um über die Cloud-Provider-Infrastruktur (200) unter Verwendung des Datennetzes Konnektivität zu dem weiteren Netz (250) bereitzustellen,
- die Steuerungsebenenfunktion (130) des Telekommunikationsnetzes (100) eine Kommunikationssitzungsaufbau-Akzeptanznachricht sendet und die Benutzerausrüstung (20) die Kommunikationssitzungsaufbau-Akzeptanznachricht empfängt,
- die aufgebaute Kommunikationssitzung durch die Benutzerausrüstung (20) verwendet wird, um über die Benutzerebenenfunktion (140) des Telekommunikationsnetzes (100) auf das weitere Netz (250) zuzugreifen.

10. Programm, umfassend einen computerlesbaren Programmcode, der, wenn er auf einem Computer und/oder in einer Benutzerausrüstung (20) und/oder in einem Netzknoten eines Telekommunikationsnetzes (100), insbesondere einer Steuerungsebenenfunktion (130), oder teilweise in der Benutzerausrüstung (20) und/oder teilweise in dem Netzknoten eines Telekommunikationsnetzes (100), insbesondere der Steuerungsebenenfunktion (130), ausgeführt wird, den Computer und/oder die Benutzerausrüstung (20) und/oder den Netzknoten des Telekommunikationsnetzes (100) veranlasst, ein Verfahren nach einem der Ansprüche 1 bis 7 durchzuführen.

11. Computerlesbares Medium, umfassend Instruktionen, die, wenn sie auf einem Computer und/oder in einer Benutzerausrüstung (20) und/oder in einem Netzknoten eines Telekommunikationsnetzes (100), insbesondere einer Steuerungsebenenfunktion (130), oder teilweise in der Benutzerausrüstung (20) und/oder teilweise in dem Netzknoten eines Telekommunikationsnetzes (100), insbesondere der Steuerungsebenenfunktion (130), ausgeführt werden, den Computer und/oder die Benutzerausrüstung (20) und/oder den Netzknoten des Telekommunikationsnetzes (100) veranlassen, ein Verfahren nach einem der Ansprüche 1 bis 7 durchzuführen.

## Revendications

1. Procédé d'utilisation d'un équipement d'utilisateur (20) avec un réseau de télécommunications (100), dans lequel l'équipement d'utilisateur (20) demande, tout en étant connecté au réseau de télécommunications (100), à être connecté ou à accéder à un autre réseau (250), dans lequel le réseau de télécommunications (100) comprend une fonction de plan de commande (130) et une fonction de plan d'utilisateur (140), dans lequel l'autre réseau (250) est un réseau virtuel faisant partie d'une infrastructure de fournisseur de services en nuage (200),
dans lequel l'autre réseau (250) est accessible, à partir de l'infrastructure de fournisseur de services en nuage (200), en utilisant une information d'identifiant de réseau cible (251), dans lequel, pour que l'équipement d'utilisateur (20) puisse utiliser ou accéder à l'autre réseau (250), un réseau de données et un nom de réseau de données associé doivent être provisionnés ou établis au niveau du réseau de télécommunications (100) ou entre le réseau de télécommunications (100) et l'infrastructure de fournisseur de services en nuage (200),
dans lequel, pour que l'équipement d'utilisateur (20) puisse être connecté ou accéder à l'autre réseau (250), le procédé comprend les étapes suivantes :
- dans une première étape, l'équipement d'utilisateur (20) demande l'établissement d'une session de communication vers l'autre réseau (250), en utilisant l'information d'identifiant de réseau cible (251) en tant que partie d'un message de demande transmis, par l'équipement d'utilisateur (20), à la fonction de plan de commande (130) du réseau de télécommunications (100),
- dans une deuxième étape, la session de communication est associée au réseau de données et/ou au nom de réseau de données afin de fournir une connectivité vers l'autre réseau (250) via l'infrastructure de fournisseur de services en nuage (200) en utilisant le réseau de données,
- dans une troisième étape, l'équipement d'utilisateur (20) reçoit un message d'acceptation d'établissement de session de communication, transmis par la fonction de plan de commande (130) du réseau de télécommunications (100),
- dans une quatrième étape, l'équipement d'utilisateur (20) utilise la session de communication établie pour accéder à l'autre réseau (250) via la fonction de plan d'utilisateur (140) du réseau de télécommunications (100) .

2. Procédé selon la revendication 1, dans lequel l'autre réseau (250) est accessible, en utilisant l'information d'identifiant de réseau cible (251), uniquement à partir de l'infrastructure de fournisseur de services en nuage (200),
dans lequel, en particulier, l'autre réseau (250) n'est pas directement accessible à partir de l'extérieur de l'infrastructure de fournisseur de services en nuage (200).

3. Procédé selon l'une des revendications précédentes, dans lequel la session de communication est ou correspond à une session d'unité de données de protocole, PDU, et/ou dans lequel la fonction de plan de commande (130) est ou correspond à la fonction de gestion de session ou à une instance de fonction de gestion de session.

4. Procédé selon l'une des revendications précédentes, dans lequel - après le provisionnement ou l'établissement du réseau de données - le réseau de données et l'autre réseau (250) ainsi que son information d'identifiant de réseau cible (251) sont assignés l'un à l'autre,
dans lequel, en particulier, cette assignation est stockée dans une entité ou une fonctionnalité de dépôt du réseau de télécommunications (100), dans lequel, en particulier, cette assignation est effectuée
- avant la première étape, ou
- après la première étape, en particulier après la troisième étape.

5. Procédé selon l'une des revendications précédentes, dans lequel le réseau de données et l'autre réseau (250) et/ou le nom de réseau de données et son information d'identifiant de réseau cible (251) sont assignés l'un à l'autre, cette assignation ainsi que le provisionnement ou l'établissement du réseau de données étant effectués après la première étape, en particulier après la troisième étape.

6. Procédé selon l'une des revendications précédentes, dans lequel l'infrastructure de fournisseur de services en nuage (200) comprend une entité ou une fonctionnalité de contrôleur de nuage (210) et/ou une entité ou une fonctionnalité de routeur d'entrée de nuage (220), dans lequel le provisionnement ou l'établissement du réseau de données et/ou l'assignation ou l'association du réseau de données, de l'autre réseau (250) et de son information d'identifiant de réseau cible (251) implique la prise de contact, par le réseau de télécommunications (100), avec l'entité ou la fonctionnalité de contrôleur de nuage (210) et/ou l'entité ou la fonctionnalité de routeur d'entrée de nuage (220).

7. Procédé selon l'une des revendications précédentes, dans lequel l'information d'identifiant de réseau cible (251) est ou correspond à ou comprend une information d'identifiant unique universel, UUID, de l'autre réseau (250),
dans lequel, en particulier, l'information d'identifiant de réseau cible (251) comprend une information d'identifiant d'infrastructure relative à l'infrastructure de fournisseur de services en nuage (200), ou identifiant l'infrastructure de fournisseur de services en nuage (200).

8. Équipement d'utilisateur (20) destiné à être utilisé avec un réseau de télécommunications (100), dans lequel l'équipement d'utilisateur (20) est configuré pour demander, tout en étant connecté au réseau de télécommunications (100), à être connecté ou à accéder à un autre réseau (250), dans lequel l'autre réseau (250) est un réseau virtuel faisant partie d'une infrastructure de fournisseur de services en nuage (200) et l'autre réseau (250) est accessible, à partir de l'infrastructure de fournisseur de services en nuage (200), en utilisant une information d'identifiant de réseau cible (251),
dans lequel, pour que l'équipement d'utilisateur (20) puisse utiliser ou accéder à l'autre réseau (250), un réseau de données et un nom de réseau de données associé doivent être provisionnés ou établis au niveau du réseau de télécommunications (100) ou entre le réseau de télécommunications (100) et l'infrastructure de fournisseur de services en nuage (200),
dans lequel, pour que l'équipement d'utilisateur (20) puisse être connecté ou accéder à l'autre réseau (250), l'équipement d'utilisateur (20) est configuré de telle sorte que :
- l'équipement d'utilisateur (20) demande l'établissement d'une session de communication vers l'autre réseau (250), en utilisant l'information d'identifiant de réseau cible (251) en tant que partie d'un message de demande transmis, par l'équipement d'utilisateur (20), à la fonction de plan de commande (130) du réseau de télécommunications (100),
- l'équipement d'utilisateur (20) reçoit un message d'acceptation d'établissement de session de communication, transmis par la fonction de plan de commande (130) du réseau de télécommunications (100),
- l'équipement d'utilisateur (20) utilise la session de communication établie pour accéder à l'autre réseau (250) via la fonction de plan d'utilisateur (140) du réseau de télécommunications (100) après que la session de communication a été associée au réseau de données et/ou au nom de réseau de données afin de fournir une connectivité vers l'autre réseau (250) via l'infrastructure de fournisseur de services en nuage (200) en utilisant le réseau de données.

9. Réseau de télécommunications (100) pour utiliser un équipement d'utilisateur (20) avec le réseau de télécommunications (100), dans lequel l'équipement d'utilisateur (20) demande, tout en étant connecté au réseau de télécommunications (100), à être connecté ou à accéder à un autre réseau (250), dans lequel le réseau de télécommunications (100) comprend une fonction de plan de commande (130) et une fonction de plan d'utilisateur (140), dans lequel l'autre réseau (250) est un réseau virtuel faisant partie d'une infrastructure de fournisseur de services en nuage (200),
dans lequel l'autre réseau (250) est accessible, à partir de l'infrastructure de fournisseur de services en nuage (200), en utilisant une information d'identifiant de réseau cible (251),
dans lequel, pour que l'équipement d'utilisateur (20) puisse utiliser ou accéder à l'autre réseau (250), un réseau de données et un nom de réseau de données associé doivent être provisionnés ou établis au niveau du réseau de télécommunications (100) ou entre le réseau de télécommunications (100) et l'infrastructure de fournisseur de services en nuage (200),
dans lequel, pour que l'équipement d'utilisateur (20) puisse être connecté ou accéder à l'autre réseau (250), le système ou le réseau de télécommunications (100) est configuré de telle sorte que :
- le réseau de télécommunications (100) reçoit, de l'équipement d'utilisateur (20), un message de demande concernant une session de communication à établir vers l'autre réseau (250), l'information d'identifiant de réseau cible (251) faisant partie du message de demande reçu par la fonction de plan de commande (130) du réseau de télécommunications (100),
- la session de communication est associée au réseau de données et/ou au nom de réseau de données afin de fournir une connectivité vers l'autre réseau (250) via l'infrastructure de fournisseur de services en nuage (200) en utilisant le réseau de données,
- la fonction de plan de commande (130) du réseau de télécommunications (100) transmet, et l'équipement d'utilisateur (20) reçoit, un message d'acceptation d'établissement de session de communication,
- la session de communication établie est utilisée, par l'équipement d'utilisateur (20), pour accéder à l'autre réseau (250) via la fonction de plan d'utilisateur (140) du réseau de télécommunications (100) .

10. Programme comprenant un code de programme lisible par ordinateur qui, lorsqu'il est exécuté sur un ordinateur et/ou sur un équipement d'utilisateur (20) et/ou sur un noeud de réseau d'un réseau de télécommunications (100), en particulier une fonction de plan de commande (130), ou en partie sur l'équipement d'utilisateur (20) et/ou en partie sur le noeud de réseau d'un réseau de télécommunications (100), en particulier la fonction de plan de commande (130), amène l'ordinateur et/ou l'équipement d'utilisateur (20) et/ou le noeud de réseau du réseau de télécommunications (100) à mettre en œuvre un procédé selon l'une des revendications 1 à 7.

11. Support lisible par ordinateur comprenant des instructions qui, lorsqu'elles sont exécutées sur un ordinateur et/ou sur un équipement d'utilisateur (20) et/ou sur un noeud de réseau d'un réseau de télécommunications (100), en particulier une fonction de plan de commande (130), ou en partie sur l'équipement d'utilisateur (20) et/ou en partie sur le noeud de réseau d'un réseau de télécommunications (100), en particulier la fonction de plan de commande (130), amènent l'ordinateur et/ou l'équipement d'utilisateur (20) et/ou le noeud de réseau du réseau de télécommunications (100) à mettre en œuvre un procédé selon l'une des revendications 1 à 7.
